(19) Europäisches Patentamt / European Patent Office / Office européen des brevets

(11)  **EP 2 503 512 B1**

(12)  **EUROPEAN PATENT SPECIFICATION**

(45) Date of publication and mention
of the grant of the patent:
**17.05.2017   Bulletin 2017/20**

(51) Int Cl.:
**G06T 15/00** *(2011.01)*     **G06F 9/30** *(2006.01)*
**G06F 9/22** *(2006.01)*     **G06F 9/26** *(2006.01)*

(21) Application number: **10831597.9**

(22) Date of filing: **17.11.2010**

(86) International application number:
**PCT/JP2010/070510**

(87) International publication number:
**WO 2011/062203 (26.05.2011 Gazette 2011/21)**

(54) **GRAPHICS VERTEX PROCESSING DEVICE, IMAGE PROCESSING DEVICE, GRAPHICS VERTEX PROCESSING METHOD AND RECORDING MEDIUM**

GRAPHIKVERTEXVERARBEITUNGSVORRICHTUNG, BILDVERARBEITUNGSVORRICHTUNG, GRAPHIKVERTEXVERARBEITUNGSVERFAHREN UND AUFZEICHNUNGSMEDIUM

DISPOSITIF DE TRAITEMENT DE SOMMETS DE GRAPHIQUES, DISPOSITIF DE TRAITEMENT D'IMAGES, PROCÉDÉ DE TRAITEMENT DE SOMMETS DE GRAPHIQUES ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.11.2009   JP 2009261561**

(43) Date of publication of application:
**26.09.2012   Bulletin 2012/39**

(73) Proprietor: **NEC Solution Innovators, Ltd.
Tokyo 136-8627 (JP)**

(72) Inventor: **OKA Fumiaki
Osaka-shi
Osaka 540-8551 (JP)**

(74) Representative: **Vossius & Partner
Patentanwälte Rechtsanwälte mbB
Siebertstrasse 3
81675 München (DE)**

(56) References cited:
**EP-A2- 0 071 028       EP-A2- 0 498 067
WO-A1-2007/132746    JP-A- 4 309 131
JP-A- 10 307 720        US-A- 5 185 870
US-A- 5 781 792         US-B1- 6 581 154**

## Description

Technical Field

The present invention relates to a graphics vertex processing device, an image processing device, a graphics vertex processing method and a recording medium for executing an arithmetic processing relating to a vertex of a polygon, etc., in a computer graphics.

Background Art

In a computer graphics drawing process, an arithmetic processing relating to a vertex of an object subjected to drawing (hereinafter, referred to as a "drawing-target object") is generally called a vertex processing (see, for example, Patent Literature 1, namely JP 2008-512771 A). When, for example, an image projecting a drawing-target object in a 3D (3 dimension, three-dimension) virtual space is drawn on a display screen, the vertex processing divides the surface of the drawing-target object in the 3D virtual space into multiple polygons, and calculates the coordinates of vertexes of the polygon, and so on. Moreover, the vertex processing includes a lighting processing, calculation of texture coordinates, generation of fog coordinates, and generation of a point size, etc., in addition to the calculation of the coordinates. The coordinate calculation is performed together with, for example, the movement of a visual point in the 3D virtual space, and the movement of the drawing-target object. The lighting processing sets the diffuse (diffuse: dispersion of light) components and specular (specular: reflection of light) components of each vertex. When the surface is divided into fine pieces in instruction to display the image of the drawing-target object with a smooth contour, the process load of the vertex processing increases at an exponential rate.

Devices executing a vertex processing are called graphics vertex processing devices. The graphics vertex processing devices are roughly classified into a device using a fixed pipeline and a device using a microcode control.

The device using the fixed pipeline includes a hardware optimized for a specific process flow. Hence, this device can execute the specific process at a fast speed. This device is, however, unable to execute the processes other than the specific process flow without the change of the hardware.

Moreover, the device using the microcode control holds successive micro instructions for a predetermined process in a memory device, etc., in this device as instruction sequences. The micro instruction is a minimum unit of an instruction processed in the device using the microcode control. Moreover, the instruction sequences are a set of instructions containing equal to or greater than one micro instruction. The device using the microcode control reads the instruction sequences specified by a host computer from the memory device, etc.,

and successively executes such instructions. Hence, this device is capable of executing an arbitrary vertex processing specified by the host computer.

The device using the microcode control can change the process through a program, and can execute the unrestricted vertex processing. However, because of the data dependency in the instruction sequences, the use rate of the arithmetic unit often decreases. More specifically, this device executes the instruction sequences one by one using some of or all of the hardware resources. Hence, when, for example, the host computer successively specifies the instruction sequences using only some of the hardware resources, the execution speed of the vertex processing decreases.

As a technology of increasing the execution speed of the device using the microcode instruction, a method of sorting the execution order of the successive micro instructions (an out-of-order execution) and a method of executing the successive micro instructions in a parallel manner are known.

For example, the microcode generating device disclosed in Patent Literature 2, namely JP H04-309131 A, determines whether or not the plurality of micro instructions successively input are executable in a parallel manner. When determining that the plurality of micro instructions are executable in a parallel manner, the generating device outputs a microcode that is a combination of the plurality of micro instructions. Conversely, when determining that the plurality of micro instructions are not executable in a parallel manner, the generating device outputs only the first micro instruction of the input orders. The device using the microcode control and having this generating device can increase the execution speed when the micro instructions executable in a parallel manner are successively input.

Prior Art Documents

EP 0 498 067 A2 shows an apparatus for generating microcode in a scalable compound instruction set machine operating in response to compounding information indicating that two or more adjacent instructions are to be executed in parallel.

Disclosure of Invention

Problem to be Solved by the Invention

However, the microcode generating device of Patent Literature 2 needs a complicated control circuit which determines whether or not micro instructions are executable in a parallel manner and which generates a micro code. Hence, the device using the microcode control has the circuit scale increased. Moreover, the microcode generating device of Patent Literature 2 cannot generate a microcode when the micro instructions with close input orders are not executable in a parallel manner even if the micro instructions with the input orders separated from each other by equal to or greater than two are executable in a parallel manner. Hence, the use rate of the arithmetic unit is low and the improvement of the executing speed of the graphics vertex processing device has an upper limit.

The present invention has been made in view of the above-explained circumstances, and it is an object of the present invention to provide a graphics vertex processing device, an image processing device, a graphics vertex processing method and a recording medium which have a high use rate of a arithmetic unit.

Moreover, it is another object of the present invention to provide a graphics vertex processing device, an image processing device, a graphics vertex processing method and a recording medium which can execute a fast-speed arithmetic processing with a simple configuration.

Means for Solving the Problem

A graphics vertex processing device according to a first aspect of the present invention includes: a microcode storing unit that stores a microcode including an instruction sequence and a composite instruction sequence, the composite instruction sequence containing a plurality of instruction sequences coupled together so as to sort micro instructions and to process the plurality of instruction sequences in a parallel manner; a buffer that stores information on a vertex subjected to an arithmetic processing and an instruction sequence index for identifying a content of the arithmetic processing for the information on the vertex; instruction selection means for selecting a microcode corresponding to the number of successive instruction sequence indexes from microcodes stored in the microcode storing unit based on one or equal to or greater than two successive instruction sequence indexes stored in the buffer; and an arithmetic processing means for executing an arithmetic processing on the information on the vertex based on the selected microcode by the instruction selection means.

An image processing device according to a second aspect of the present invention includes: the above-explained graphics vertex processing device; and a computer which generates a microcode containing an instruction sequence and a composite instruction sequence, the composite instruction sequence containing a plurality of instruction sequences coupled together so as to sort micro instructions and to process the plurality of instruction sequences in a parallel manner, supplies the generated microcode to the graphics vertex processing device, generates information on a vertex subjected to an arithmetic processing and an instruction sequence index for identifying a content of the arithmetic processing for the information on the vertex, and supplies the generated information and instruction sequence index to the graphics vertex processing device.

A graphics vertex processing method according to a third aspect of the present invention includes: a step of storing, in a microcode storing unit, a microcode including an instruction sequence and a composite instruction sequence, the composite instruction sequence containing a plurality of instruction sequences coupled together so as to sort micro instructions and to process the plurality of instruction sequences in a parallel manner; a step of obtaining information on a vertex subjected to an arithmetic processing and an instruction sequence index for identifying a content of the arithmetic processing for the information on the vertex and storing the obtained information and instruction sequence index in a buffer; an instruction selection step of selecting a microcode corresponding to the number of successive instruction sequence indexes from microcodes stored in the microcode storing unit based on one or equal to or greater than two successive instruction sequence indexes stored in the buffer; and an arithmetic processing step of executing an arithmetic processing on the information on the vertex based on the microcode selected in the instruction selection step.

A computer-readable recording medium according to a fourth aspect of the present invention stores a program that allows a computer to function as: means for storing, in a microcode storing unit, a microcode including an instruction sequence and a composite instruction sequence with a plurality of instruction sequences coupled together so as to sort micro instructions and to process the plurality of instruction sequences in a parallel manner; means for obtaining information on a vertex subjected to an arithmetic processing and an instruction sequence index for identifying a content of the arithmetic processing for the information on the vertex and storing the obtained information and instruction sequence index in a buffer; instruction selection means for selecting a microcode corresponding to the number of successive instruction sequence indexes from microcodes stored in the microcode storing unit based on one or equal to or greater than two successive instruction sequence indexes stored in the buffer; and arithmetic processing means for executing an arithmetic processing on the information on the vertex based on the microcode selected in the instruction selection step.

Effect of the Invention

According to the present invention, it becomes possible to execute a fast-speed vertex processing in a graphics drawing process.

Brief Description of Drawings

FIG. 1 is a block diagram showing an illustrative configuration of a graphics vertex processing device according to an embodiment of the present invention;
FIG. 2 is a diagram for explaining how to generate a microcode and header address information according to the embodiment;

FIG. 3 is a diagram showing a correspondence between a vertex-data/instruction-sequence index input into the graphics vertex processing device of the embodiment and a microcode to be executed;

FIG. 4 is a diagram showing an example execution speed when instruction sequences are successively executed without a composite instruction sequence and coordinate conversion is performed;

FIG. 5 is a diagram showing an example execution speed when a composite instruction sequence is executed and coordinate conversion is performed;

FIG. 6 is a flowchart showing an example operation of the graphics vertex processing device according to the embodiment;

FIG. 7 is a diagram showing an illustrative structure of a sub address table according to a modified example of the embodiment;

FIG. 8 is a diagram showing a correspondence between a vertex-data/instruction-sequence index input into a graphics vertex processing device according to a modified example of the embodiment and a microcode to be executed;

FIG. 9 is a flowchart showing an example operation of the graphics vertex processing device according to a modified example of the embodiment; and

FIG. 10 is a diagram showing an illustrative hardware configuration of a graphics vertex processing device according to the present invention.

Best Mode for Carrying Out the Invention

An embodiment of the present invention will be explained in detail with reference to the accompanying drawings. The same or corresponding structural element will be denoted by the same reference numeral in the drawings.

<Embodiment>

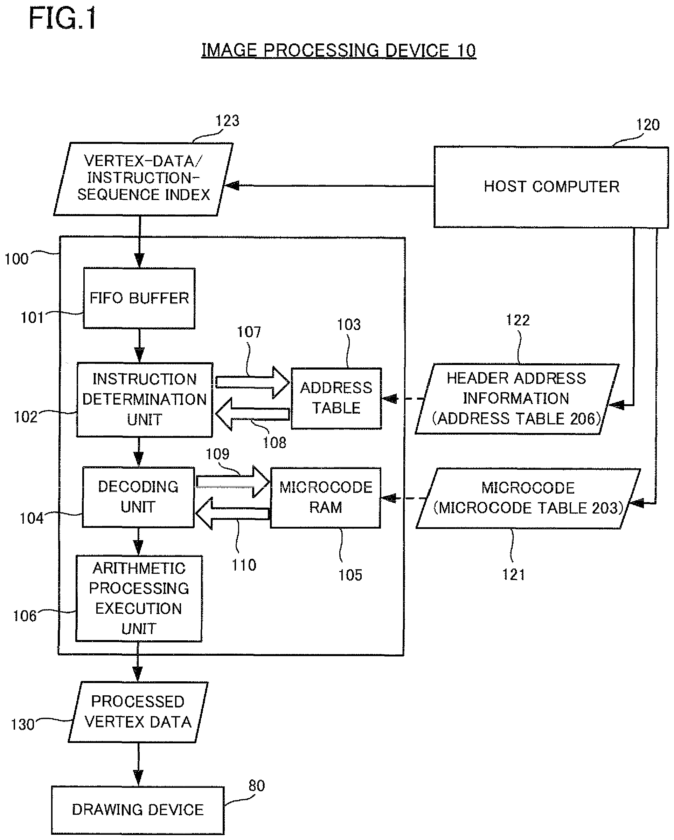

As shown in FIG. 1, an image processing device 10 according to an embodiment of the present invention includes a host computer 120, a graphics vertex processing device 100, and a drawing device 80.

The host computer 120 specifies an image to be processed and a process to be performed on the image. The host computer 120 outputs a microcode 121, header address information 122 and vertex-data/instruction-sequence index 123 to the graphics vertex processing device 100.

The microcode 121 is a collective term of an instruction sequence and a composite instruction sequence.

The header address information 122 includes the header address of each instruction sequence 201 and the header address 108 of each composite instruction sequence 202.

The vertex-data/instruction-sequence index 123 is a pair of vertex data and an instruction sequence index that is an identification code of an instruction sequence of a process to be performed on that vertex data. The vertex data is, for example, coordinate data of a vertex of a polygon.

The drawing device 80 includes a device of executing a process other than the vertex processing for graphics drawing, and a device of combining data output by the graphics vertex processing device 100 with other data, etc.

The graphics vertex processing device 100 includes an FIFO (First-In, First-Out) buffer 101, an instruction determination unit 102, an address table 103, a decoding unit 104, a microcode RAM (Random-Access Memory) 105, and an arithmetic processing execution unit 106.

The FIFO buffer 101 stores the supplied vertex-data/instruction-sequence index 123 in a first-in and first-out manner.

The instruction determination unit 102 specifies an instruction sequence from the instruction sequence index, and obtains an address of a location where the microcode of that instruction sequence is stored.

An arrow from the instruction determination unit 102 to the address table 103 indicates one or a plurality of instruction sequence indexes 107. An arrow from the address table 103 to the instruction determination unit 102 indicates the header address 108 of the microcode 121.

The decoding unit 104 obtains a micro instruction corresponding to the instruction sequence index from the memory area following the header address 108.

An arrow from the decoding unit 104 to the microcode RAM 105 indicates an execution address 109 of the microcode 121. An arrow from the microcode RAM 105 to the decoding unit 104 indicates a micro instruction 110.

<Operation of Host Computer 120>

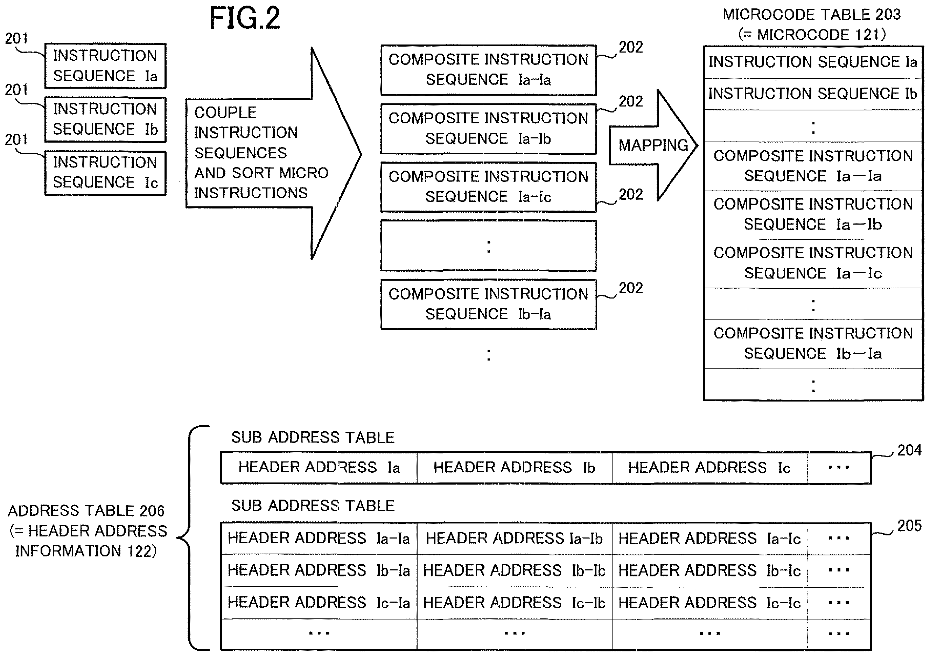

In order to execute the vertex processing by the graphics vertex processing device 100, the host computer 120 prepares the microcode 121 and the header address information 122, and supplies such microcode and header address information to the graphics vertex processing device 100. The method of generating the microcode 121 and the header address information 122 executed by the mihost computer 120 will be explained with reference to FIG. 2.

First, the host computer 120 combines the two instruction sequences 201, and sorts the micro instructions, thereby generating a composite instruction sequence 202 for processing the two instruction sequences 201 in a parallel manner. The output when the composite instruction sequence is executed is same as one when the two instruction sequences 201 are successively executed. For example, when a composite instruction sequence Ia-Ia generated from two instruction sequences Ia is executed, the same output when the instruction sequence Ia is successively executed twice is obtained. Moreover, the instruction sequences Ia are executed in a parallel manner by sorting of the micro instructions, execution of the composite instruction sequence Ia-Ia allows the graphics vertex processing device 100 to improve the use rate of arithmetic unit rather than successive execution of the instruction sequences Ia one by one, enabling a fast-speed calculation. Likewise, the host computer 120 also generates the composite instruction sequence 202 for processing a combination of the other two instruction sequences 201 in a parallel manner.

According to this embodiment, as shown in FIG. 2, the host computer 120 generates a composite instruction sequence from two instruction sequences. However, the number of instruction sequences to generate a composite instruction sequence is not limited to two. For example, a composite instruction sequence may be generated from equal to or greater than three instruction sequences.

The host computer 120 has the instruction sequences 201 and the composite instruction sequence 202 generated in this fashion subjected to mapping, and generates a microcode table 203. Moreover, the host computer 120 generates a sub address table 204 containing the header address of each instruction sequence 201 as an element and a sub address table 205 containing the header address 108 of each composite instruction sequence 202 as an element. The sub address table 204 and the sub address table 205 are collectively referred to as an address table 206.

The host computer 120 inputs the microcode table 203 in the graphics vertex processing device 100 as the microcode 121. Moreover, the host computer 120 inputs the address table 206 in the graphics vertex processing device 100 as the header address information 122.

Thereafter, the host computer 120 starts inputting the vertex-data/instruction-sequence index 123 in the graphics vertex processing device 100.

<Operation of Graphics Vertex Processing Device 100>

Next, an operation of the graphics vertex processing device 100 that has obtained the input from the host computer 120 will be explained with reference to FIG. 1.

First, the graphics vertex processing device 100 stores the obtained header address information 122 and microcode 121 in the address table 103 and the microcode RAM 105, respectively. Thereafter, the graphics vertex processing device 100 receives the input of the vertex-data/instruction-sequence index 123.

The input vertex-data/instruction-sequence index 123 is once stored in the FIFO buffer 101. The FIFO buffer 101 has a storage volume capable of storing plural sets of vertex-data/instruction-sequence indexes 123. Moreover, the vertex-data/instruction-sequence indexes 123 are output in the order of such indexes input.

The instruction determination unit 102 refers to the address table 103 using the instruction sequence index 107 output by the FIFO buffer 101, and obtains the header address 108 of the microcode 121 corresponding to the instruction sequence index 107. At this time, the instruction determination unit 102 obtains the header addresses 108 from the sub address tables 204 and 205, respectively, in accordance with the number of instruction sequence indexes used for reference. The instruction determination unit 102 selects the header address 108 obtained using a larger number of instruction sequence indexes, and notifies the decoding unit 104 of the selected header address 108.

The decoding unit 104 sets the notified header address 108 in the execution address 109. Next, the decoding unit 104 refers to the microcode RAM 105, and obtains the micro instruction 110 corresponding to the execution address 109. Subsequently, the decoding unit decodes the micro instruction 110, and gives the decoded micro instruction to the arithmetic processing execution unit 106.

The arithmetic processing execution unit 106 executes the decoded micro instruction 110, and outputs processed vertex data 130.

The graphics vertex processing device 100 executes the microcodes 121 to perform the vertex processing until the instruction sequence 201 to be executed ends, and outputs processed vertex data 130. The above-explained operation is the operation of the graphics vertex processing device 100 that selects and executes the composite instruction sequence 202 based on the plurality of instruction sequences 201.

Next, the above-explained operation of the graphics vertex processing device 100 will be explained in more detail based on a specific example.

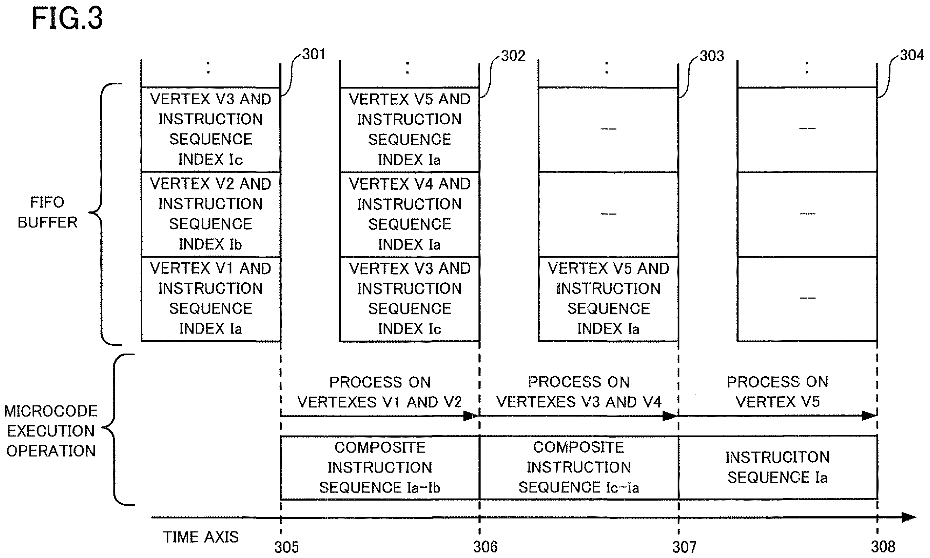

First, an explanation will be given of a process of generating a microcode executed by the arithmetic processing execution unit 106 from the vertex-data/instruction-sequence index 123 stored in the FIFO buffer 101. In this example, as shown in FIG. 3, it is presumed that the host computer 120 inputs such indexes from a data/instruction-sequence index Ia of a vertex V1 to a data/instruction-sequence index Ia of a vertex V5. In this case, the graphics vertex processing device 100 operates as follows.

First, it is presumed that at a time point 305 the FIFO buffer 101 becomes a condition 301 of storing plural sets of vertex-data/instruction-sequence indexes 123. In this case, the instruction determination unit 102 refers to the address table 103 in the order of the data/instruction-sequence indexes input using the instruction sequence index Ia corresponding to the vertex V1 and the instruction sequence index Ib corresponding to the vertex V2.

At this time, the instruction determination unit 102 obtains two header addresses 108. The one is a header address Ia-Ib of the composite instruction sequence Ia-Ib referred using the instruction sequence in-

dexes Ia and Ib. The other is a header address Ia of the instruction sequence Ia referred using only the instruction sequence index Ia. The instruction determination unit 102 selects, from the obtained two header addresses 108, the header address 108 obtained using the larger number of instruction sequence indexes, i.e., the header address Ia-Ib of the composite instruction sequence Ia-Ib. Thereafter, the arithmetic processing execution unit 106 executes the selected composite instruction sequence Ia-Ib. The graphics vertex processing device 100 processes pieces of data on the vertexes V1 and V2 in this fashion.

At a time point 306 that is an end timing of the composite instruction sequence Ia-Ib, the FIFO buffer 101 is in a condition 302 of storing plural sets of vertex-data/instruction-sequence indexes 123. In this case, like the timing of the time point 305, the instruction determination unit 102 obtains a header address Ic-Ia of a composite instruction sequence Ic-Ia. Thereafter, the arithmetic processing execution unit 106 executes the composite instruction sequence Ic-Ia. The graphics vertex processing device 100 processes pieces of data on the vertexes V3 and V4 in this fashion.

It is presumed that at a time point 307 the FIFO buffer 101 becomes a condition 303 of storing only a set of vertex-data/instruction-sequence index 123. In this case, the instruction determination unit 102 obtains the header address Ia of the instruction sequence Ia referred using the instruction sequence index Ia. Thereafter, the arithmetic processing execution unit 106 executes the instruction sequence Ia. The graphics vertex processing device 100 processes data on the vertex V5 in this fashion.

It is presumed that at a timing of a time point 308 the FIFO buffer 101 becomes a condition 304 of storing no set of vertex-data/instruction-sequence index 123. In this case, until the vertex-data/instruction-sequence index 123 is accumulated in the FIFO buffer 101, the graphics vertex processing device 100 does not execute the microcode 121.

As explained above, the graphics vertex processing device 100 processes the vertex-data/instruction-sequence indexes 123 successively input.

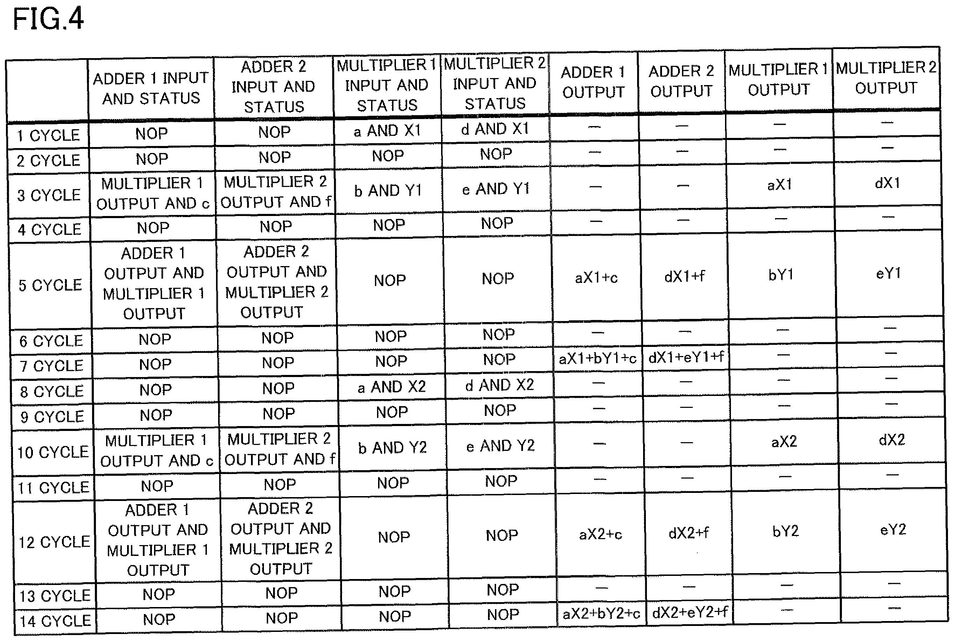

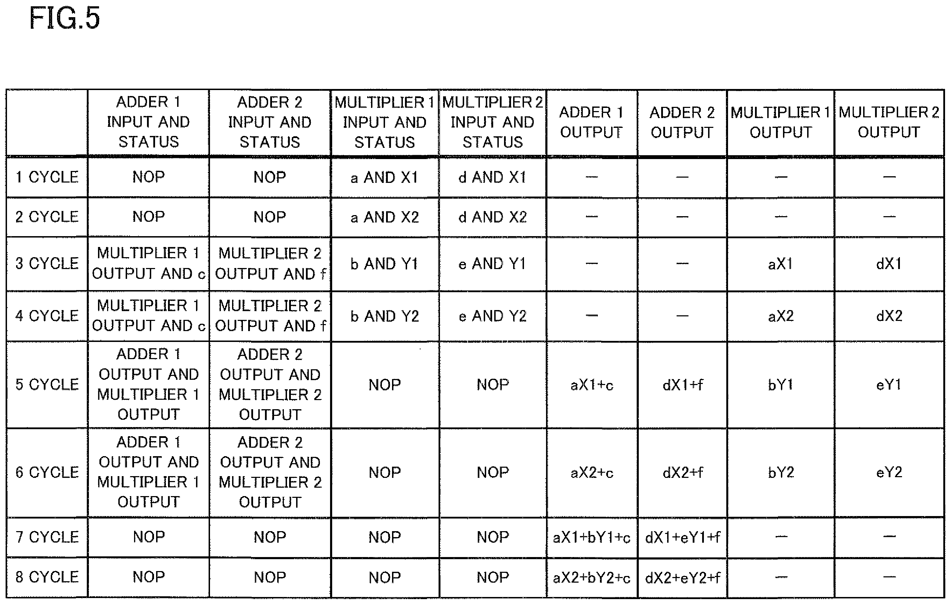

Next, an explanation will be given of the execution speed of the vertex processing when the composite instruction sequence is used and the execution speed of the vertex processing and the use rate of the arithmetic unit when no composite instruction sequence is used with reference to FIG. 4 and FIG. 5. The vertex processing to be executed is coordinate conversion on two vertexes. The term NOP in the figures means no operation (do nothing). The coordinate conversion executes a process indicated by the following formulae to the given coordinates (X, Y). Note that a to f are coordinate conversion parameters and coordinates (X', Y') are results of the coordinate conversion.

$$X' = a \cdot X + b \cdot Y + c$$

$$Y' = d \cdot X + e \cdot Y + f$$

The arithmetic unit configuration of the arithmetic processing execution unit 106 is presumed as follows for both cases in which the composite instruction sequence is used and no composite instruction sequence is used. The delay time necessary for the arithmetic unit to reply data, i.e., the latency is two clocks. Moreover, the arithmetic processing execution unit 106 has two adders and two multipliers which can execute a pipeline operation. The arithmetic unit is capable of processing the output result of a calculation as an input of a next calculation without any waiting time when the instruction sequences to be processed are two. Furthermore, the arithmetic unit is capable of inputting/outputting another instruction sequence while processing one instruction sequence. Hence, each arithmetic unit can execute arithmetic processing without any waiting time.

FIG. 4 shows an example execution speed when the instruction sequences of coordinate conversion are executed one by one without any composite instruction sequence, i.e., when coordinate conversion are successively performed on coordinates (X1, Y1) and coordinates (X2, Y2) of two vertexes. The input/output of each adder and multiplier are as shown in FIG. 4. The coordinate conversion on the two vertexes needs 14 cycles at minimum.

FIG. 5 shows an example execution speed when the composite instruction sequence is executed and the coordinate conversion is performed. As shown in FIG. 5, the input/output of each adder and multiplier are successively executed without a waiting time. Hence, the coordinate conversion on the two vertexes can be executed at eight cycles at minimum.

As shown in FIG. 4 and FIG. 5, when the same vertex processing is executed using the same arithmetic processing execution unit, the number of cycles necessary for the graphics vertex processing device 100 to execute the vertex processing becomes little if the composite instruction sequence is executed rather than successive execution of the instruction sequences, and the execution speed increases.

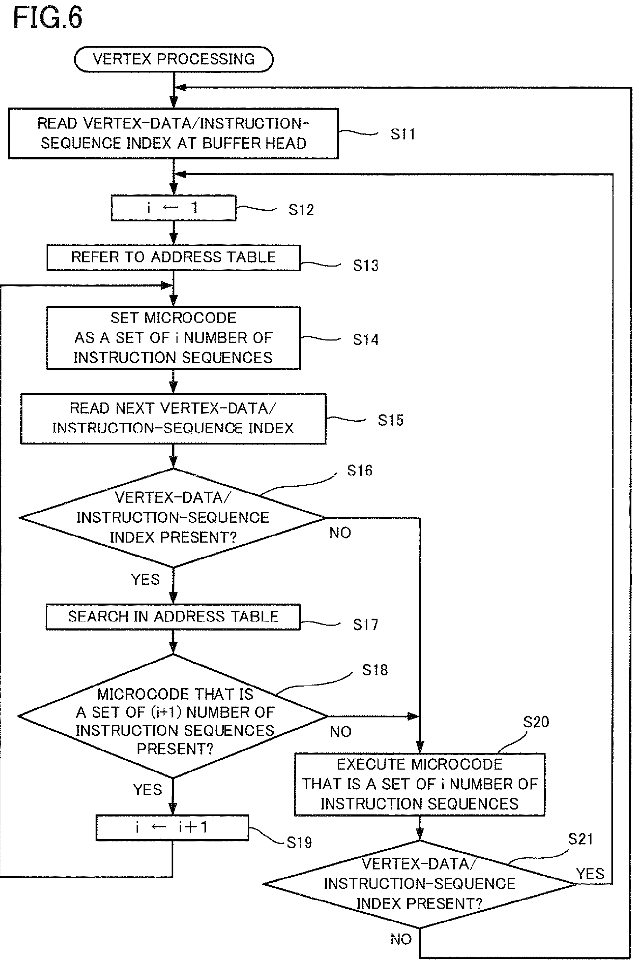

FIG. 6 is a flowchart showing an example operation of the graphics vertex processing device 100 according to this embodiment. The graphics vertex processing device 100 stores the header address information 122 generated by the host computer 120 in the address table 103 and microcode 121 in the microcode RAM 105 in advance. Next, the host computer 120 starts inputting the vertex-data/instruction-sequence index 123 into the graphics vertex processing device 100.

The instruction determination unit 102 reads the vertex-data/instruction-sequence index 123 of the head of the FIFO buffer 101 (step S11). The instruction determination unit 102 substitutes the number of vertexes that is one into the number of vertexes i (step S12). The instruction determination unit 102 refers to the address table 103 (step S13). The decoding unit 104 sets a microcode that is a combination of number of instruction sequences (step S14). The instruction determination unit 102 reads the next vertex-data/instruction-sequence index 123 again (step S15). When there is the next vertex-data/instruction- sequence index 123 (step S16: YES), the instruction determination unit 102 searches in the address table 103 (step S17). Next, when there is a microcode that is a combination of (i+1) number of instruction sequences (step S18: YES), the instruction determination unit 102 substitutes (i+1) into the number of vertexes i (step S 19), and the process returns to the step S 14.

When there is no next vertex-data/instruction-sequence index 123 in the step S16 (step S16: NO), or when there is no microcode that is a combination of (i+1) number of instruction sequences in the step S18 (step S18: NO), the arithmetic processing execution unit 106 executes the microcode that is a combination of i number of instruction sequences (step S20). Thereafter, when there is the next vertex-data/instruction-sequence index 123 (step S21: YES), the process returns to the step S12. Moreover, when there is no next vertex-data/instruction-sequence index 123 (step S21: NO), the process returns to the first step S11. The graphics vertex processing device 100 repeats the above-explained successive flow, thereby executing the vertex processing.

Through the above-explained operation, the graphics vertex processing device 100 selects the composite instruction sequence for executing the larger number of instruction sequences in a parallel manner and executes the vertex processing.

<Modified Example of Embodiment>

According to the above-explained embodiment, the host computer 120 generates in advance the composite instruction sequence 202 and the address table 206 corresponding to all combinations of instruction sequences 201. Hence, depending on the number of combinations, it is difficult to generate such composite instruction sequence and address table for all combinations and it becomes necessary to have a large-capacity memory device. Hence, an explanation will be given of a modified example of the embodiment which executes the vertex processing effectively with a smaller number of combinations.

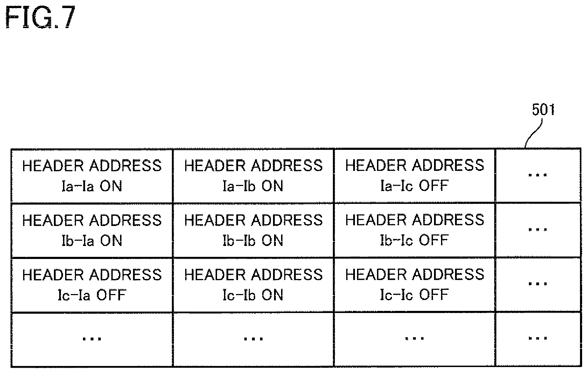

As shown in FIG. 7, the host computer 120 adds in advance an on signal when generating the composite instruction sequence 202 and an off signal when generating no composite instruction sequence to each element of a sub address table 501. When referring the sub address table 501, the instruction determination unit 102 obtains the header address 108 when the on signal is added. When the off signal is added, the instruction determination unit refers to the sub address table 204 with a lower preference, and obtains the header address 108.

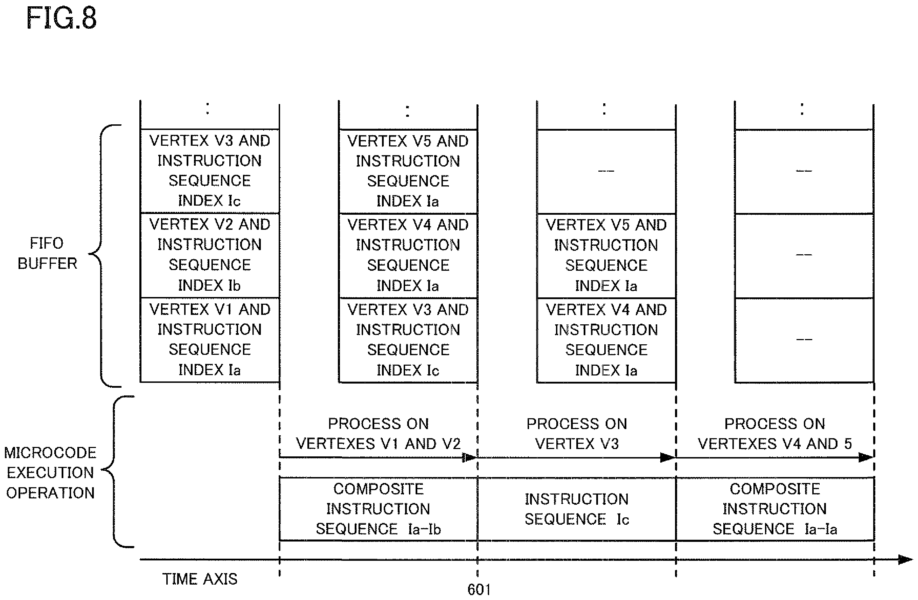

An explanation will be given of an example correspondence between the vertex-data/instruction-sequence index 123 and the microcode to be executed when the on/off signal is added as is indicated by the sub address table 501 with reference to FIG. 8. At a timing of a time point 601, the FIFO buffer 101 stores plural vertex-data/instruction-sequence indexes 123. The first two vertex-data/instruction-sequence indexes 123 are an instruction sequence index Ic and an instruction sequence index Ia. However, the off signal is added to a header address Ic-Ia of the composite instruction sequence Ic-Ia. Hence, after the instruction determination unit 102 selects a header address Ic of the instruction sequence Ic, the arithmetic processing execution unit 106 executes the instruction sequence Ic. Accordingly, even if the host computer 120 does not generate the composite instruction sequence Ic-Ia, the desired vertex processing can be executed. The quantity of microcodes 121 by what corresponding to the composite instruction sequence added with the off signal can be reduced in this manner.

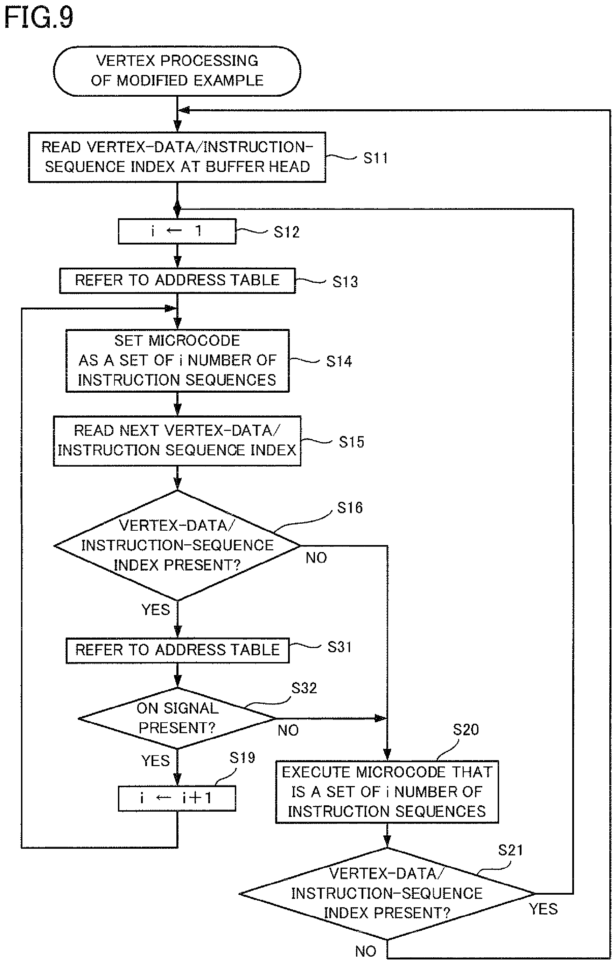

FIG. 9 is a flowchart showing an example operation of the graphics vertex processing device 100 according to the modified example of the embodiment. According to the operation in the modified example, a checking operation (step S 18) of the presence/absence of the microcode that is a combination of (i+1) number of instruction sequences of the embodiment is replaced with a checking operation (step S32) of the presence/absence of the on signal.

The basic operation of the graphics vertex processing device 100 of the modified example is similar to the operation of the graphics vertex processing device 100 of the embodiment shown in FIG. 6. More specifically, the operation up to the step S16 is consistent. Moreover, the operation following the determination in the step S 16 that there is no vertex-data/instruction-sequence index 123 (step S16: NO) is same as that of the graphics vertex processing device 100 of the embodiment.

When there is the next vertex-data/instruction-sequence index 123 in the step S16 in the FIFO buffer (step S16: YES), the instruction determination unit 102 refers to the address table 103 (step S31). More specifically, the instruction determination unit 102 refers to the on/off signal added in advance to each element of the address table 103. When the referred element is added with the on signal (step S32: YES), (i+1) is substituted in the number of vertexes i (step S19), and the process returns to the step S14. When the referred element is added with the off signal (step S32: NO), the arithmetic processing execution unit 106 executes the microcode that is a combination of the i number of instruction sequences (step S20). The following flow is consistent with the operation of the graphics vertex processing device 100 of the embodiment.

When the plurality of above-explained graphics vertex processing devices of the embodiment are coupled in parallel, a further faster-speed vertex processing can be expected.

Moreover, according to the graphics vertex processing device of the modified example of the embodiment, when not generating all composite instruction sequences, the graphics vertex processing device can execute an arbitrary vertex processing. Hence, the quantity of the microcodes generated by the host computer 120 in advance can be reduced, and thus needing no increase of the memory device.

The first advantage of the graphics vertex processing device 100 of the embodiment is to enable the operation of the composite instruction sequence for processing a plurality of vertexes in a parallel manner and to enable the fast-speed calculation. The second advantage of the embodiment is to make a complicated control circuit unnecessary for sorting, etc., of the micro instructions, which is necessary for the prior art since the host computer generates the composite instruction sequence in advance. The third advantage of the embodiment is to enable the sorting of not only the micro instructions with successive input orders but also the micro instructions having input orders different from each other by equal to or greater than two for a combination of arbitrary instruction sequences.

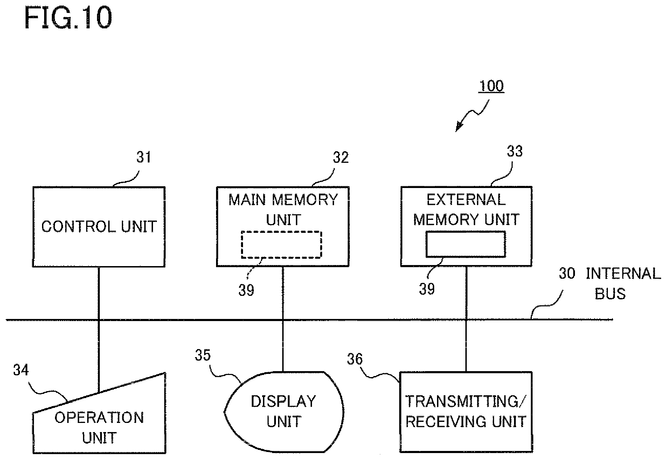

FIG. 10 is a diagram showing an illustrative hardware configuration of the graphics vertex processing device 100 shown in FIG. 1. As shown in FIG. 10, the graphics vertex processing device 100 includes a control unit 31, a main memory unit 32, an external memory unit 33, an operation unit 34, a display unit 35, and a transmitting/receiving unit 36. The main memory unit 32, the external memory unit 33, the operation unit 34, the display unit 35, and the transmitting/receiving unit 36 are all connected to the control unit 31 via an internal bus 30.

The control unit 31 includes, for example, a CPU (Central Processing Unit). The control unit 31 executes respective processes by the FIFO buffer 101, the instruction determination unit 102, the address table 103, the decoding unit 104, the microcode RAM 105, and the arithmetic processing execution unit 106 in accordance with a control program 39 stored in the external memory unit 33.

The main memory unit 32 includes a RAM, etc. The main memory unit 32 loads the control program 39 stored in the external memory unit 33, and is used as the work area for the control unit 31.

The external memory unit 33 includes a nonvolatile memory, such as a flash memory, a hard disk, a DVD-RAM (Digital Versatile Disc Random-Access Memory), or a DVD-RW (Digital Versatile Disc Rewritable). The external memory unit 33 stores in advance a program causing the control unit 31 to execute the process of the graphics vertex processing device 100. Moreover, the external memory unit 33 supplies data stored by the program to the control unit 31 in accordance with an instruction given by the control unit 31, and stores data supplied from the control unit 31.

The operation unit 34, includes pointing devices, such as a keyboard and a mouse, and an interface device that connects the keyboard, the pointing device, etc., with the internal bus 30. The instruction sequence, etc., is input through the operation unit 34, and is supplied to the control unit 31.

The display unit 35 is a CRT (Cathode Ray Tube) or an LCD (Liquid Crystal Display), etc., and displays a calculation result, etc.

The transmitting/receiving unit 36 includes a network terminal device or a wireless communication device connected to a network and a serial interface or a LAN (Local Area Network) interface connected to the former device. The transmitting/receiving unit 36 transmits/receives graphics vertex processing information over the network.

The processes by the FIFO buffer 101, the instruction determination unit 102, the address table 103, the decoding unit 104, the microcode RAM 105, and the arithmetic processing execution unit 106 of the graphics vertex processing device 100 shown in FIG. 1 are realized by the control program 39 using the control unit 31, the main memory unit 32, the external memory unit 33, the operation unit 34, the display unit 35, and the transmitting/receiving unit 36, etc., as resources.

The hardware configuration of the host computer 120 is substantially consistent with the configuration shown in FIG. 10.

In addition, a preferred modification of the present invention includes the following configurations.

It is preferable that the graphics vertex processing device according to the first aspect of the present invention should include an address table which has an index for identifying an instruction sequence contained in each microcode and a code for identifying the microcode stored in the microcode storing unit, and the instruction selection means should refer to the address table based on one or equal to or greater than two successive instruction sequence indexes stored in the buffer, and select the microcode.

It is preferable that the address table should have a flag for distinguishing the microcode stored in the microcode storing unit and the microcode not stored in the microcode storing unit for each index of the microcode, and the instruction selection means should select the microcode based on the flag in the address table.

It is preferable that in the graphics vertex processing method according to the third aspect of the present invention the instruction selection step should refer to the address table having an index for identifying an instruction sequence contained in each microcode and a code for identifying the microcode stored in the microcode storing unit, and selects the microcode based on one or equal to or greater than two successive instruction sequence indexes stored in the buffer.

It is preferable that the address table should have a flag for distinguishing the microcode stored in the microcode storing unit and the microcode not stored in the microcode storing unit for each index of the microcode, and the instruction selection step should select the microcode based on the flag in the address table.

It is preferable that the graphics vertex processing method should further include a step of generating the microcode and a step of generating information on a vertex subjected to a calculation and an instruction sequence index for identifying the content of the calculation for the information on the vertex.

Furthermore, the above-explained hardware configurations and flowcharts are merely examples, and can be changed and modified in various forms as needed.

The main part configured by the FIFO buffer 101, the instruction determination unit 102, the address table 103, the decoding unit 104, the microcode RAM 105, and the arithmetic processing execution unit 106, etc., and for executing the graphics vertex processing can be realized by not only an exclusive device but also a general computer system. For example, a computer program for the above-explained operations may be stored in a computer-readable recording medium (such as a flexible disc, a CD-ROM, or a DVD-ROM), distributed, and installed in a computer to configure the graphics vertex processing device executing the above-explained process. Moreover, such a computer program may be stored in a memory device of a server device, etc., over communication network like the Internet, and for example, downloaded to a general computer system to configure such a computer as the graphics vertex processing device.

When, for example, the graphics vertex processing device is realized by assignation of an OS (operating system) and an application program or a cooperation of the OS and the application program, only the application program part may be stored in a recording medium or a memory device.

The computer program superimposed on a carrier wave may be distributed over a communication network. For example, the computer program may be put into a bulletin board (a BBS: Bulletin Board System) over the communication network, and may be distributed over the network. The computer program is activated and is executed like the other application programs under the control of the OS to configure a device to execute the above-explained process.

The present invention is based on a Japanese Patent Application No. 2009-261561 filed on November 17, 2009.

Description of Reference Numerals

| | |
|---|---|
| 10 | Image processing device |
| 100 | Graphics vertex processing device |
| 101 | FIFO buffer |
| 102 | Instruction determination unit |
| 103 | Address table |
| 104 | Decoding unit |
| 105 | Microcode RAM |
| 106 | Arithmetic processing execution unit |
| 107 | Instruction sequence index |
| 108 | Header address |
| 109 | Execution address |
| 110 | Micro instruction |
| 120 | Host computer |
| 121 | Microcode |
| 122 | Header address information |
| 123 | Vertex-data/instruction-sequence index |
| 130 | Processed vertex data |
| 80 | Drawing device |
| 201 | Instruction sequence |
| 202 | Composite instruction sequence |
| 203 | Microcode table |
| 204 | Sub address table |
| 205 | Sub address table |
| 206 | Address table |
| 30 | Internal bus |
| 31 | Control unit |
| 32 | Main memory unit |
| 33 | External memory unit |
| 34 | Operation unit |
| 35 | Display unit |
| 36 | Transmitting/receiving unit |
| 39 | Control program |
| 501 | Sub address table |

**Claims**

1. A graphics vertex processing device (100), **characterized by** comprising:

   a microcode storing unit (105) that stores microcodes (121) including an instruction sequence (201) and a composite instruction sequence (202), the instruction sequence (201) including one or more micro instructions (110), the composite instruction sequence (202) containing successive instruction sequences (201) configured to be executed in a parallel manner and combined together after the micro instructions (110) included in the successive instruction sequences (201) are re-ordered;
   a buffer (101) that stores vertex data subjected to an arithmetic processing and an instruction sequence index (107) for identifying the instruction sequence (201) for the arithmetic processing for the vertex data;
   an address table (103) containing an instruction sequence index for identifying the instruction sequence (201) included in each microcode (121), and header addresses (108) for identifying the microcodes (121) stored in the microcode storing unit (105);

instruction determining means (102) for referring to the address table (103) based on one instruction sequence index (107) and two or more successive instruction sequence indices (107) stored in the buffer (101), to determine whether the two or more instruction sequence indices correspond to a composite instruction sequence stored in the microcode storing unit (105), and to select a header address (108) for a stored microcode (121) corresponding to the one instruction sequence index, or the two or more instruction sequence indices (107);

decoding means (104) for acquiring from the microcode storing unit (105) the one or more micro instructions (110) of the microcode (121) indicated by the header address (108) selected by the instruction determining means (102), and decoding the acquired micro instruction (110); and

arithmetic processing means (106) for executing the arithmetic processing on the vertex data by executing the micro instruction (110) decoded by the decoding means (104).

2. The graphics vertex processing device (100) according to Claim 1, wherein

the address table (103) contains, for each index of the microcode (121), a flag for distinguishing a microcode (121) stored in the microcode storing unit (105) and a microcode (121) not stored in the microcode storing unit (105), and

the instruction determining means (102) refers to the flag in the address table (103) to select the header address (108) for the microcode (121).

3. An image processing device comprising:

the graphics vertex processing device (100) according to Claims 1 or 2; and

a computer which generates one or more microcodes (121) containing an instruction sequence (201) and a composite instruction sequence (202), the instruction sequence (201) including one or more micro instructions, the composite instruction sequence (202) containing successive instruction sequences (201) configured to be executed in a parallel manner and coupled together by re-ordering the micro instructions included in the successive instruction sequences (201), supplies the one or more generated microcodes (121) to the graphics vertex processing device (100), generates vertex data subjected to an arithmetic processing and an instruction sequence index (107) for identifying an instruction sequence (201) for the arithmetic processing for the vertex data, and supplies the generated information and instruction sequence index (107) to the graphics vertex processing device (100).

4. A graphics vertex processing method, **characterized by** comprising:

a step of storing, in a microcode storing unit (105), microcodes (121) including an instruction sequence (201) and a composite instruction sequence (202), the instruction sequence (201) including one or more micro instructions, the composite instruction sequence (202) containing successive instruction sequences (201) configured to be executed in a parallel manner and combined together after the micro instructions (110) included in the successive instruction sequences are re-ordered;

a step of obtaining information on vertex data subjected to an arithmetic processing and an instruction sequence index (107) for identifying the instruction sequence (201) for the arithmetic processing for the vertex data and storing the obtained information and instruction sequence index (107) in a buffer (101);

an instruction selection step of referring to an address table (103) based on one instruction sequence index (107) and two or more successive instruction sequence (201) indices (107) stored in the buffer (101), to determine whether the two or more instruction sequence indices correspond to a composite instruction sequence stored in the microcode storing unit (105), and to select a header address (108) for a stored microcode (121) corresponding to the one instruction sequence index, or the two or more instruction sequence indices (107), the address table (103) containing an instruction sequence index for identifying the instruction sequence (201) included in each microcode (121), and header addresses (108) for identifying the microcodes (121) stored in the microcode storing unit (105);

a decoding step of obtaining from the microcode storing unit (105) the one or more micro instructions (110) of the microcode (121) indicated by the header address (108) selected in the instruction selection step, and decoding the acquired micro instruction; and

an arithmetic processing step of executing the arithmetic processing the vertex data by executing the micro instruction decoded in the decoding step.

5. The graphics vertex processing method according to Claim 4, wherein

the address table (103) contains, for each index of the microcode (121), a flag for distinguishing a microcode (121) stored in the microcode storing unit (105) and a microcode (121) not stored in the microcode storing unit (105), and
the instruction determining step refers to the flag in the address table (103) to select the header address (108) for the microcode (121).

6. The graphics vertex processing method according to any one of Claims 4 or 5, further comprising:

> a step of generating the microcode (121); and
> a step of generating the vertex data subjected to the arithmetic processing and the instruction sequence index (107) for identifying the instruction sequence (201) for the arithmetic processing for the vertex data.

7. A computer-readable recording medium storing a program and running on a computer, to allow the computer to configure the graphics vertex processing device of claim 1 to carry out the method of claim 4.


**Patentansprüche**

1. Graphikvertexverarbeitungsvorrichtung (100), die **dadurch gekennzeichnet ist, dass** sie aufweist:

> eine Mikrocodespeichereinheit (105), die Mikrocodes (121) speichert, die eine Befehlsfolge (201) und eine zusammengesetzte Befehlsfolge (202) umfassen, wobei die Befehlsfolge (201) einen oder mehrere Mikrobefehle (110) umfasst, wobei die zusammengesetzte Befehlsfolge (202) aufeinanderfolgende Befehlsfolgen (201) enthält, die konfiguriert sind, in einer parallelen Weise ausgeführt und miteinander kombiniert zu werden, nachdem die in den aufeinanderfolgenden Befehlsfolgen (201) enthaltenden Mikrobefehle (110) neu geordnet sind;
> einen Puffer (101), der Vertexdaten, die einer arithmetischen Verarbeitung unterzogen werden, und einen Befehlsfolgeindex (107) zum Identifizieren der Befehlsfolge (201) für die arithmetische Verarbeitung für die Vertexdaten speichert;
> eine Adresstabelle (103), die einen Befehlsfolgeindex zum Identifizieren der Befehlsfolge (201), die in jedem Mikrocode (121) enthalten ist, und Kopfadressen (108) zum Identifizieren der in der Mikrocodespeichereinheit (105) gespeicherten Mikrocodes (121) enthält;
> ein Befehlsfeststellungsmittel (102) zur Bezugnahme auf die Adresstabelle (103) beruhend auf einem Befehlsfolgeindex (107) und zwei oder mehreren aufeinanderfolgenden Befehlsfolgeindizes (107), die im Puffer (101) gespeichert sind, um festzustellen, ob die beiden oder mehreren Befehlsfolgeindizes einer zusammengesetzten Befehlsfolge entsprechen, die in der Mikrocodespeichereinheit (105) gespeichert ist, und um eine Kopfadresse (108) für den einen gespeicherten Mikrocode (121) auszuwählen, die dem einen Befehlsfolgeindex oder den beiden oder mehreren Befehlsfolgeindizes (107) entspricht;
> Decodierungsmittel (104) zum Erfassen aus der Mikrocodespeichereinheit (105) des einen oder der mehreren Mikrobefehle (110) des Mikrocodes (121), der durch die Kopfadresse (108) angezeigt wird, die durch das Befehlsfeststellungsmittel (102) ausgewählt wird, und Decodieren des erfassten Mikrobefehls (110); und
> ein arithmetisches Verarbeitungsmittel (106) zum Ausführen der arithmetischen Verarbeitung an den Vertexdaten durch Ausführen des Mikrobefehls (110), der durch das Decodierungsmittel (104) decodiert wird.

2. Graphikvertexverarbeitungsvorrichtung (100) nach Anspruch 1, wobei die Adresstabelle (103) für jeden Index des Mikrocodes (121) einen Merker enthält zum Unterscheiden eines Mikrocodes (121), der in der Mikrocodespeichereinheit (105) gespeichert ist, und eines Mikrocodes (121), der nicht in der Mikrocodespeichereinheit (105) gespeichert ist, und das Befehlsfeststellungsmittel (102) auf den Merker in der Adresstabelle (103) Bezug nimmt, um die Kopfadresse (108) für den Mikrocode (121) auszuwählen.

3. Bildverarbeitungsvorrichtung, die aufweist:

> die Graphikvertexverarbeitungsvorrichtung (100) nach Anspruch 1 oder 2; und
> einen Computer, der einen oder mehrere Mikrocodes (121) erzeugt, die eine Befehlsfolge (201) und eine zusammengesetzte Befehlsfolge (202) enthalten, wobei die Befehlsfolge (201) einen oder mehrere Mikrobefehle umfasst, wobei die zusammengesetzte Befehlsfolge (202) aufeinanderfolgende Befehlsfolgen (201) enthält, die konfiguriert sind, in einer parallelen Weise ausgeführt zu werden und durch erneutes Anordnen der in den aufeinanderfolgenden Befehlsfolgen (201) enthaltenen Mikrobefehle miteinander gekoppelt zu werden, den einen oder die mehreren erzeugten Mikrocodes (121) an die Graphikvertexverarbeitungsvorrichtung (100) liefert, Vertexdaten, die einer arithmetischen Verarbeitung unterzogen werden, und einen Befehlsfolgeindex (107) zum Identifizieren eine Befehlsfolge (201) für die arithmetische Verarbeitung für die Vertexdaten erzeugt und die erzeugten Informationen und den Befehlsfolgeindex (107) an die Graphikvertexverarbeitungsvorrichtung (100) liefert.

**4.** Graphikvertexverarbeitungsverfahren, das **dadurch gekennzeichnet ist, dass** es aufweist:

einen Schritt zum Speichern in einer Mikrocodespeichereinheit (105) von Mikrocodes (121), die eine Befehlsfolge (201) und eine zusammengesetzte Befehlsfolge (202) umfassen, wobei die Befehlsfolge (201) einen oder mehrere Mikrobefehle umfasst, wobei die zusammengesetzte Befehlsfolge (202) aufeinanderfolgende Befehlsfolgen (201) enthält, die konfiguriert sind, in einer parallelen Weise ausgeführt und miteinander kombiniert zu werden, nachdem die in den aufeinanderfolgenden Befehlsfolgen enthaltenen Mikrobefehle (110) neu geordnet werden; einen Schritt zum Beschaffen von Informationen über Vertexdaten, die einer arithmetischen Verarbeitung unterzogen werden, und eines Befehlsfolgeindex (107) zum Identifizieren der Befehlsfolge (201) für die arithmetische Verarbeitung für die Vertexdaten und Speichern der beschafften Informationen und des Befehlsfolgeindex (107) in einem Puffer (101); einen Befehlsauswahlschritt zum Bezugnehmen auf eine Adresstabelle (103) beruhend auf einem Befehlsfolgeindex (107) und zwei oder mehreren aufeinanderfolgenden Befehlsfolgeindizes (107), die im Puffer (101) gespeichert sind, um festzustellen, ob die beiden oder mehreren Befehlsfolgeindizes einer zusammengesetzten Befehlsfolge entsprechen, die in der Mikrocodespeichereinheit (105) gespeichert sind, und um eine Kopfadresse (108) für den einen gespeicherten Mikrocode (121) auszuwählen, die dem einen Befehlsfolgeindex oder den beiden oder mehreren Befehlsfolgeindizes (107) entspricht, wobei die Adresstabelle (103) einen Befehlsfolgeindex zum Identifizieren der Befehlsfolge (201), die in jedem Mikrocode (121) enthalten ist, und Kopfadressen (108) zum Identifizieren der in der Mikrocodespeichereinheit (105) gespeicherten Mikrocodes (121) enthält; einen Decodierungsschritt zum Beschaffen aus der Mikrocodespeichereinheit (105) des einen oder der mehrere Mikrobefehle (110) des Mikrocodes (121), der durch die Kopfadresse (108) angezeigt wird, die im Befehlsauswahlschritt ausgewählt wird, und Decodieren des erfassten Mikrobefehls; und einen arithmetischen Verarbeitungsschritt zum Ausführen der arithmetischen Verarbeitung der Vertexdaten durch Ausführen des im Decodierungsschritt decodierten Mikrobefehls.

**5.** Graphikvertexverarbeitungsverfahren nach Anspruch 4, wobei die Adresstabelle (103) für jeden Index des Mikrocodes (121) einen Merker enthält zum Unterscheiden eines Mikrocodes (121), der in der Mikrocodespeichereinheit (105) gespeichert ist, und eines Mikrocodes (121), der nicht in der Mikrocodespeichereinheit (105) gespeichert ist, und der Befehlsfeststellungschritt auf den Merker in der Adresstabelle (103) Bezug nimmt, um die Kopfadresse (108) für den Mikrocode (121) auszuwählen.

**6.** Graphikvertexverarbeitungsverfahren nach einem der Ansprüche 4 oder 5, das ferner aufweist:

einen Schritt zum Erzeugen des Mikrocodes (121); und einen Schritt zum Erzeugen der Vertexdaten, die der arithmetischen Verarbeitung unterzogen werden, und des Befehlsfolgeindex (107) zum Identifizieren der Befehlsfolge (201) für die arithmetische Verarbeitung für die Vertexdaten.

**7.** Computerlesbares Aufzeichnungsmedium, das ein Programm speichert und auf einem Computer ausführt, um es dem Computer zu ermöglichen, die Graphikvertexverarbeitungsvorrichtung nach Anspruch 1 zu konfigurieren, das Verfahren nach Anspruch 4 auszuführen.

**Revendications**

**1.** Dispositif de traitement de sommets de graphiques (100), **caractérisé en ce qu'**il comprend :

une unité de stockage de microcodes (105) mémorisant des microcodes (121) comportant une séquence d'instructions (201) et une séquence d'instructions complexe (202), la séquence d'instructions (201) comprenant une ou plusieurs micro-instructions (110), la séquence d'instructions complexe (202) contenant des séquences d'instructions successives (201) prévues pour être exécutées de manière parallèle et combinées entre elles après ré-ordonnancement des micro-instructions (110) comprises dans les séquences d'instructions successives (201) ; une mémoire-tampon (101) stockant des données de sommets soumises à un traitement arithmétique et un index de séquences d'instructions (107) pour identifier la séquence d'instructions (201) pour le traitement arithmétique des données de sommets ; un tableau d'adresses (103) contenant un index de séquences d'instructions pour identifier la séquence d'instructions (201) comprise dans chaque microcode (121), et des adresses d'en-tête (108) pour identifier les microcodes (121) stockés dans l'unité de stockage de microcodes (105) ;

une unité de détermination d'instructions (102) pour renvoi au tableau d'adresses (103) sur la base d'un index de séquences d'instructions (107) et d'au moins deux index de séquences d'instructions successives (107) stockés dans la mémoire-tampon (101), pour déterminer si les au moins deux index de séquences d'instructions correspondent à une séquence d'instructions complexe stockée dans l'unité de stockage de microcodes (105), et pour sélectionner une adresse d'en-tête (108) pour un microcode mémorisé (121) correspondant à l'index de séquences d'instructions, ou aux au moins deux index de séquences d'instructions (107) ;

une unité de décodage (104) pour acquérir de l'unité de stockage de microcodes (105) la ou les micro-instructions (110) du microcode (121) indiqué par l'adresse d'en-tête (108) sélectionnée par l'unité de détermination d'instructions (102), et décoder la micro-instruction (110) acquise ; et

une unité de traitement arithmétique (106) pour exécuter le traitement arithmétique sur les données de sommets par exécution de la micro-instruction (110) décodée par l'unité de décodage (104).

2.  Dispositif de traitement de sommets de graphiques (100) selon la revendication 1, où le tableau d'adresses (103) contient, pour chaque index du microcode (121), un flag permettant de distinguer un microcode (121) stocké dans l'unité de stockage de microcodes (105) et un microcode (121) non stocké dans l'unité de stockage de microcodes (105), et où

l'unité de détermination d'instructions (102) renvoie au flag du tableau d'adresses (103) pour sélectionner l'adresse d'en-tête (108) pour le microcode (121).

3.  Dispositif de traitement d'image comprenant :

le dispositif de traitement de sommets de graphiques (100) selon la revendication 1 ou la revendication 2 ; et

un ordinateur générant un ou plusieurs microcodes (121) comportant une séquence d'instructions (201) et une séquence d'instructions complexe (202), la séquence d'instructions (201) comprenant une ou plusieurs micro-instructions, la séquence d'instructions complexe (202) contenant des séquences d'instructions successives (201) prévues pour être exécutées de manière parallèle et combinées entre elles après ré-ordonnancement des micro-instructions comprises dans les séquences d'instructions successives (201), délivre le ou les microcodes (121) générés au dispositif de traitement de sommets de graphiques (100), génère des données de sommets soumises à un traitement arithmétique et un index de séquences d'instructions (107) pour identifier une séquence d'instructions (201) pour le traitement arithmétique des données de sommets, et délivre l'information générée et l'index de séquences d'instructions (107) au dispositif de traitement de sommets de graphiques (100).

4.  Procédé de traitement de sommets de graphiques, **caractérisé en ce qu'**il comprend :

une étape de stockage, dans une unité de stockage de microcodes (105), de microcodes (121) comportant une séquence d'instructions (201) et une séquence d'instructions complexe (202), la séquence d'instructions (201) comprenant une ou plusieurs micro-instructions, la séquence d'instructions complexe (202) contenant des séquences d'instructions successives (201) prévues pour être exécutées de manière parallèle et combinées entre elles après ré-ordonnancement des micro-instructions (110) comprises dans les séquences d'instructions successives ;

une étape d'obtention d'une information sur des données de sommets soumises à un traitement arithmétique et un index de séquences d'instructions (107) pour identifier la séquence d'instructions (201) pour le traitement arithmétique des données de sommets, et de stockage de l'information et de l'index de séquences d'instructions (107) dans une mémoire-tampon (101) ;

une étape de sélection d'instruction renvoyant à un tableau d'adresses (103) sur la base d'un index de séquences d'instructions (107) et d'au moins deux index (107) de séquences d'instructions successives (201) stockés dans la mémoire-tampon (101), pour déterminer si les au moins deux index de séquences d'instructions correspondent à une séquence d'instructions complexe stockée dans l'unité de stockage de microcodes (105), et pour sélectionner une adresse d'en-tête (108) pour un microcode mémorisé (121) correspondant à l'index de séquences d'instructions, ou aux au moins deux index de séquences d'instructions (107), le tableau d'adresses (103) contenant un index de séquences d'instructions pour identifier la séquence d'instructions (201) comprise dans chaque microcode (121), et des adresses d'en-tête (108) pour identifier les microcodes (121) stockés dans l'unité de stockage de microcodes (105) ;

une étape de décodage, permettant d'obtenir de l'unité de stockage de microcodes (105) la ou les micro-instructions (110) du microcode (121) indiqué par l'adresse d'en-tête (108) sélectionnée lors de l'étape de sélection d'instruction, et de décodage de la micro-instruction acquise ; et une étape de traitement arithmétique, permettant d'exécuter le traitement arithmétique des données de sommets, par exécution de la micro-instruction décodée lors de l'étape de décodage.

5. Procédé de traitement de sommets de graphiques selon la revendication 4, où
le tableau d'adresses (103) contient, pour chaque index du microcode (121), un flag permettant de distinguer un microcode (121) stocké dans l'unité de stockage de microcodes (105) et un microcode (121) non stocké dans l'unité de stockage de microcodes (105), et où
l'étape de détermination d'instruction renvoie au flag du tableau d'adresses (103) pour sélectionner l'adresse d'en-tête (108) pour le microcode (121).

6. Procédé de traitement de sommets de graphiques selon la revendication 4 ou la revendication 5, comprenant en outre :

une étape de génération du microcode (121) ; et une étape de génération des données de sommets soumises au traitement arithmétique et de l'index de séquences d'instructions (107) pour identifier la séquence d'instructions (201) pour le traitement arithmétique des données de sommets.

7. Support d'enregistrement lisible par ordinateur, stockant un programme et exécuté sur un ordinateur pour permettre à l'ordinateur de configurer le dispositif de traitement de sommets de graphiques selon la revendication 1 afin d'exécuter le procédé selon la revendication 4.

# FIG.1

## IMAGE PROCESSING DEVICE 10

123 VERTEX-DATA/ INSTRUCTION-SEQUENCE INDEX

120 HOST COMPUTER

100

101 FIFO BUFFER

107

103 ADDRESS TABLE

122 HEADER ADDRESS INFORMATION (ADDRESS TABLE 206)

102 INSTRUCTION DETERMINATION UNIT

108

109

104 DECODING UNIT

105 MICROCODE RAM

121 MICROCODE (MICROCODE TABLE 203)

110

106 ARITHMETIC PROCESSING EXECUTION UNIT

130 PROCESSED VERTEX DATA

80 DRAWING DEVICE

# FIG.2

201 → INSTRUCTION SEQUENCE Ia

201 → INSTRUCTION SEQUENCE Ib

201 → INSTRUCTION SEQUENCE Ic

COUPLE INSTRUCTION SEQUENCES AND SORT MICRO INSTRUCTIONS

COMPOSITE INSTRUCTION SEQUENCE Ia-Ia — 202

COMPOSITE INSTRUCTION SEQUENCE Ia-Ib — 202

COMPOSITE INSTRUCTION SEQUENCE Ia-Ic — 202

⋮

COMPOSITE INSTRUCTION SEQUENCE Ib-Ia — 202

⋮

MAPPING

**MICROCODE TABLE 203 (= MICROCODE 121)**

| INSTRUCTION SEQUENCE Ia |
| INSTRUCTION SEQUENCE Ib |
| ⋮ |
| COMPOSITE INSTRUCTION SEQUENCE Ia−Ia |
| COMPOSITE INSTRUCTION SEQUENCE Ia−Ib |
| COMPOSITE INSTRUCTION SEQUENCE Ia−Ic |
| ⋮ |
| COMPOSITE INSTRUCTION SEQUENCE Ib−Ia |
| ⋮ |

## ADDRESS TABLE 206 (= HEADER ADDRESS INFORMATION 122)

SUB ADDRESS TABLE

| HEADER ADDRESS Ia | HEADER ADDRESS Ib | HEADER ADDRESS Ic | ••• | — 204 |

SUB ADDRESS TABLE

| HEADER ADDRESS Ia-Ia | HEADER ADDRESS Ia-Ib | HEADER ADDRESS Ia-Ic | ••• | — 205 |
| HEADER ADDRESS Ib-Ia | HEADER ADDRESS Ib-Ib | HEADER ADDRESS Ib-Ic | ••• | |
| HEADER ADDRESS Ic-Ia | HEADER ADDRESS Ic-Ib | HEADER ADDRESS Ic-Ic | ••• | |
| ••• | ••• | ••• | ••• | |

EP 2 503 512 B1

# FIG.3

EP 2 503 512 B1

# FIG.4

| | ADDER 1 INPUT AND STATUS | ADDER 2 INPUT AND STATUS | MULTIPLIER 1 INPUT AND STATUS | MULTIPLIER 2 INPUT AND STATUS | ADDER 1 OUTPUT | ADDER 2 OUTPUT | MULTIPLIER 1 OUTPUT | MULTIPLIER 2 OUTPUT |
|---|---|---|---|---|---|---|---|---|
| 1 CYCLE | NOP | NOP | a AND X1 | d AND X1 | — | — | — | — |
| 2 CYCLE | NOP | NOP | NOP | NOP | — | — | — | — |
| 3 CYCLE | MULTIPLIER 1 OUTPUT AND c | MULTIPLIER 2 OUTPUT AND f | b AND Y1 | e AND Y1 | — | — | aX1 | dX1 |
| 4 CYCLE | NOP | NOP | NOP | NOP | — | — | — | — |
| 5 CYCLE | ADDER 1 OUTPUT AND MULTIPLIER 1 OUTPUT | ADDER 2 OUTPUT AND MULTIPLIER 2 OUTPUT | NOP | NOP | aX1+c | dX1+f | bY1 | eY1 |
| 6 CYCLE | NOP | NOP | NOP | NOP | — | — | — | — |
| 7 CYCLE | NOP | NOP | NOP | NOP | aX1+bY1+c | dX1+eY1+f | — | — |
| 8 CYCLE | NOP | NOP | a AND X2 | d AND X2 | — | — | — | — |
| 9 CYCLE | NOP | NOP | NOP | NOP | — | — | — | — |
| 10 CYCLE | MULTIPLIER 1 OUTPUT AND c | MULTIPLIER 2 OUTPUT AND f | b AND Y2 | e AND Y2 | — | — | aX2 | dX2 |
| 11 CYCLE | NOP | NOP | NOP | NOP | — | — | — | — |
| 12 CYCLE | ADDER 1 OUTPUT AND MULTIPLIER 1 OUTPUT | ADDER 2 OUTPUT AND MULTIPLIER 2 OUTPUT | NOP | NOP | aX2+c | dX2+f | bY2 | eY2 |
| 13 CYCLE | NOP | NOP | NOP | NOP | — | — | — | — |
| 14 CYCLE | NOP | NOP | NOP | NOP | aX2+bY2+c | dX2+eY2+f | — | — |

EP 2 503 512 B1

## FIG.5

| | ADDER 1 INPUT AND STATUS | ADDER 2 INPUT AND STATUS | MULTIPLIER 1 INPUT AND STATUS | MULTIPLIER 2 INPUT AND STATUS | ADDER 1 OUTPUT | ADDER 2 OUTPUT | MULTIPLIER 1 OUTPUT | MULTIPLIER 2 OUTPUT |
|---|---|---|---|---|---|---|---|---|
| 1 CYCLE | NOP | NOP | a AND X1 | d AND X1 | — | — | — | — |
| 2 CYCLE | NOP | NOP | a AND X2 | d AND X2 | — | — | — | — |
| 3 CYCLE | MULTIPLIER 1 OUTPUT AND c | MULTIPLIER 2 OUTPUT AND f | b AND Y1 | e AND Y1 | — | — | aX1 | dX1 |
| 4 CYCLE | MULTIPLIER 1 OUTPUT AND c | MULTIPLIER 2 OUTPUT AND f | b AND Y2 | e AND Y2 | — | — | aX2 | dX2 |
| 5 CYCLE | ADDER 1 OUTPUT AND MULTIPLIER 1 OUTPUT | ADDER 2 OUTPUT AND MULTIPLIER 2 OUTPUT | NOP | NOP | aX1+c | dX1+f | bY1 | eY1 |
| 6 CYCLE | ADDER 1 OUTPUT AND MULTIPLIER 1 OUTPUT | ADDER 2 OUTPUT AND MULTIPLIER 2 OUTPUT | NOP | NOP | aX2+c | dX2+f | bY2 | eY2 |
| 7 CYCLE | NOP | NOP | NOP | NOP | aX1+bY1+c | dX1+eY1+f | — | — |
| 8 CYCLE | NOP | NOP | NOP | NOP | aX2+bY2+c | dX2+eY2+f | — | — |

EP 2 503 512 B1

# FIG.6

```
        ┌─────────────────────┐
        │  VERTEX PROCESSING  │◄──────────────────────────┐
        └─────────────────────┘                           │
                  │                                        │
                  ▼                                        │
  ┌─────────────────────────────────┐                     │
  │ READ VERTEX-DATA/INSTRUCTION-   │── S11               │
  │ SEQUENCE INDEX AT BUFFER HEAD   │                     │
  └─────────────────────────────────┘                     │
                  │◄──────────────────────────────────────┤
                  ▼                                        │
          ┌───────────────┐                               │
          │    i ← 1      │── S12                         │
          └───────────────┘                               │
                  │                                        │
                  ▼                                        │
      ┌───────────────────────┐                           │
      │ REFER TO ADDRESS TABLE│── S13                     │
      └───────────────────────┘                           │
                  │◄────────────────────┐                 │
                  ▼                      │                 │
      ┌───────────────────────┐         │                 │
      │    SET MICROCODE      │         │                 │
      │  AS A SET OF i NUMBER │── S14   │                 │
      │ OF INSTRUCTION SEQUENCES│       │                 │
      └───────────────────────┘         │                 │
                  │                      │                 │
                  ▼                      │                 │
    ┌─────────────────────────┐         │                 │
    │ READ NEXT VERTEX-DATA/  │── S15   │                 │
    │ INSTRUCTION-SEQUENCE    │         │                 │
    │ INDEX                   │         │                 │
    └─────────────────────────┘         │                 │
                  │                      │                 │
                  ▼  S16                 │                 │
            ╱─────────────╲             │                 │
           ╱ VERTEX-DATA/  ╲     NO      │                 │
          ╱ INSTRUCTION-    ╲────────────┼─────┐           │
          ╲ SEQUENCE INDEX  ╱            │     │           │
           ╲  PRESENT?     ╱             │     │           │
            ╲─────────────╱              │     │           │
                  │ YES                  │     │           │
                  ▼                      │     │           │
    ┌─────────────────────────┐         │     │           │
    │ SEARCH IN ADDRESS TABLE │── S17   │     │           │
    └─────────────────────────┘         │     │           │
                  │                      │     │           │
                  ▼  S18                 │     │           │
           ╱──────────────╲             │     │           │
          ╱  MICROCODE THAT ╲           │     │           │
         ╱  IS A SET OF (i+1)╲   NO      │     │           │
         ╲  NUMBER OF INSTR. ╱──────────►│     │           │
          ╲ SEQUENCES        ╱           │     │           │
           ╲  PRESENT?      ╱            │     │           │
            ╲──────────────╱             │     │           │
                  │ YES                  │     │           │
                  ▼                      ▼     ▼           │
          ┌───────────────┐    ┌─────────────────────────┐│
          │  i ← i+1      │    │   EXECUTE MICROCODE     ││ S20
          └───────────────┘    │ THAT IS A SET OF i      ││
               S19             │ NUMBER OF INSTRUCTION   ││
                               │ SEQUENCES               ││
                               └─────────────────────────┘│
                                         │                 │
                                         ▼  S21            │
                                  ╱──────────────╲  YES    │
                                 ╱ VERTEX-DATA/   ╲────────►│
                                 ╲ INSTRUCTION-   ╱
                                  ╲ SEQUENCE INDEX╱
                                   ╲  PRESENT?   ╱
                                    ╲───────────╱
                                         │ NO
```

# FIG.7

501

| HEADER ADDRESS Ia-Ia ON | HEADER ADDRESS Ia-Ib ON | HEADER ADDRESS Ia-Ic OFF | ... |
|---|---|---|---|
| HEADER ADDRESS Ib-Ia ON | HEADER ADDRESS Ib-Ib ON | HEADER ADDRESS Ib-Ic OFF | ... |
| HEADER ADDRESS Ic-Ia OFF | HEADER ADDRESS Ic-Ib ON | HEADER ADDRESS Ic-Ic OFF | ... |
| ... | ... | ... | ... |

# FIG.8

| FIFO BUFFER | | | |
|---|---|---|---|
| ⋮ | ⋮ | ⋮ | ⋮ |
| VERTEX V3 AND INSTRUCTION SEQUENCE INDEX Ic | VERTEX V5 AND INSTRUCTION SEQUENCE INDEX Ia | --- | --- |
| VERTEX V2 AND INSTRUCTION SEQUENCE INDEX Ib | VERTEX V4 AND INSTRUCTION SEQUENCE INDEX Ia | VERTEX V5 AND INSTRUCTION SEQUENCE INDEX Ia | --- |
| VERTEX V1 AND INSTRUCTION SEQUENCE INDEX Ia | VERTEX V3 AND INSTRUCTION SEQUENCE INDEX Ic | VERTEX V4 AND INSTRUCTION SEQUENCE INDEX Ia | --- |

MICROCODE EXECUTION OPERATION

| | PROCESS ON VERTEXES V1 AND V2 | PROCESS ON VERTEX V3 | PROCESS ON VERTEXES V4 AND 5 |
|---|---|---|---|
| | COMPOSITE INSTRUCTION SEQUENCE Ia-Ib | INSTRUCTION SEQUENCE Ic | COMPOSITE INSTRUCTION SEQUENCE Ia-Ia |

TIME AXIS

601

EP 2 503 512 B1

# FIG.9

VERTEX PROCESSING
OF MODIFIED EXAMPLE

READ VERTEX-DATA/INSTRUCTION-SEQUENCE INDEX AT BUFFER HEAD — S11

i ← 1 — S12

REFER TO ADDRESS TABLE — S13

SET MICROCODE AS A SET OF i NUMBER OF INSTRUCTION SEQUENCES — S14

READ NEXT VERTEX-DATA/INSTRUCTION SEQUENCE INDEX — S15

VERTEX-DATA/INSTRUCTION-SEQUENCE INDEX PRESENT? — S16
NO
YES

REFER TO ADDRESS TABLE — S31

ON SIGNAL PRESENT? — S32
NO
YES

i ← i+1 — S19

EXECUTE MICROCODE THAT IS A SET OF i NUMBER OF INSTRUCTION SEQUENCES — S20

VERTEX-DATA/INSTRUCTION-SEQUENCE INDEX PRESENT? — S21
YES
NO

FIG.10

100

31
CONTROL UNIT

32
MAIN MEMORY UNIT
39

33
EXTERNAL MEMORY UNIT
39

30  INTERNAL BUS

34
OPERATION UNIT

35
DISPLAY UNIT

36
TRANSMITTING/ RECEIVING UNIT

**EP 2 503 512 B1**

**Patent documents cited in the description**

- JP 2008512771 A
- JP H04309131 A
- EP 0498067 A2
- JP 2009261561 A